# DEMANDE DE BREVET EUROPEEN

(11) **EP 0 592 332 A1**
(43) Date de publication de la demande: **13.04.1994**
(21) Numéro de dépôt: 93420372.0
(22) Date de dépôt: 17.09.1993
(51) Int. Cl.: B26D 7/26

(54) **Massicot de découpe d'onglets**

(30) Priorité: 29.09.1992 FR 9211917
(71) Demandeur: Mathian, Louis, F-38320 Bresson (FR)
(72) Inventeur: Mathian, Louis, F-38320 Bresson (FR)

(57) **Abrégé**

Un massicot pour la réalisation d'onglets comporte une partie mobile 14 portant le couteau 17. Un mécanisme à vis 28 et à écrou 29 commande la translation de la partie mobile 14, laquelle est guidée et supportée par une glissière 13, constituée par un rail 30 en tôle pliée et un chariot 31 à quatre galets de guidage. L'écrou 29 est relié à la partie mobile 14 par une articulation 36,37 palliant les imperfections de fabrication.

## Description

L'invention est relative à un massicot de bureau ayant un châssis pouvant être posé sur une table, ledit châssis comportant un plateau fixe de support d'une ou de plusieurs feuilles à massicoter, une partie mobile montée en translation par rapport audit plateau, un couteau porté par ladite partie mobile et susceptible de se débattre dans un plan perpendiculaire audit plateau en coopérant avec un contre-couteau pour massicoter la feuille posée sur le plateau et un mécanisme de translation à vis et à écrou pour déplacer la partie mobile, lesdits couteau et contre-couteau ayant des extrémités recourbées pour une découpe d'une bande laissant subsister un onglet.

Un massicot du genre mentionné fait l'objet de la demande de brevet européen N° 0 491 633, de la demanderesse, à laquelle demande le lecteur se référera avantageusement pour les détails de réalisation et de fonctionnement de ce massicot. Ce massicot donne entière satisfaction, mais le système d'entraînement par vis et par écrou, indispensable au positionnement précis du couteau par rapport au plateau fixe pour la découpe d'un onglet, nécessite l'emploi d'une vis longue parfaitement usinée, ainsi que l'emploi d'un moteur d'entraînement relativement puissant. De même la glissière de guidage et de support de la partie mobile doit être extrêmement précise et ces contraintes obèrent le prix de fabrication et donc l'intérêt de cet appareil.

La présente invention a pour but de perfectionner le massicot précité en vue de permettre sa fabrication à partir de pièces standard ou de pièces réalisées par des procédés simples, tout en conservant la précision requise.

Le massicot selon l'invention est caractérisé en ce que la liaison entre ledit écrou et ladite partie mobile présente un degré de liberté dans la direction perpendiculaire à l'axe de la vis pour pallier les variations d'écartement entre l'écrou et la partie mobile lors du vissage ou dévissage de l'écrou sur la vis.

Les défauts de parallélisme entre la vis et la partie mobile et de linéarité de la vis sont compensés par la liaison selon l'invention, entre la vis et la partie mobile. Cette liaison du type articulé est avantageusement réalisée par un doigt d'entraînement, porté par la partie mobile en s'étendant perpendiculairement à la direction de translation et qui s'emboîte à coulissement dans un orifice conjugué de l'écrou.

Le positionnement précis de l'écrou sur la vis est également important et selon un développement de l'invention l'écrou, de forme allongée, présente à chacune de ses extrémités un tronçon en forme de douille d'entraînement et/ou de guidage coopérant avec la vis, lesdits tronçons étant espacés le long de la vis. Les deux tronçons d'extrémité peuvent être filetés ou seul l'un d'entre eux, l'autre assurant seulement le guidage de la douille. Cet écrou peut être réalisé de différentes manières, par exemple de deux écrous espacés sur un même support ou de préférence par une douille tubulaire dont la partie centrale est élargie. Il est indispensable de prévoir un certain jeu entre la vis standard et l'écrou et ce jeu provoque un fonctionnement bruyant, qui est avantageusement atténué en prévoyant selon l'invention un dispositif élastique qui sollicite transversalement l'écrou en appui de la vis.

Selon un autre développement important de l'invention la glissière de guidage et de support de la partie mobile est constituée d'un rail profilé et d'un chariot, dont l'un est porté par la partie mobile et dont l'autre est solidaire du plateau fixe. Le rail de section en forme de C est de préférence fixé au plateau fixe parallèlement à la vis et le chariot est alors solidaire de la partie mobile et est monté à coulissement à l'intérieur du rail en C pour guider la partie mobile en translation. Le rail peut être formé par une simple tôle dont les bords longitudinaux sont repliés et le chariot comporte avantageusement deux paires de galets, espacées le long du rail. L'un des galets de chaque paire coopère avec le bord inférieur du rail et l'autre galet de la paire coopère avec le bord supérieur du rail, les deux galets supérieurs étant montés élastiquement en appui du rail pour compenser les défauts de fabrication.

D'autres avantages et caractéristiques ressortiront plus clairement de la description qui va suivre d'un mode de mise en oeuvre de l'invention donné à titre d'exemple non limitatif et représenté aux dessins annexés, dans lesquels:
- les figures 1 et 2 sont des vues analogues aux figures 1 et 2 de la demande de brevet précitée, montrant respectivement en élévation et en plan un massicot selon l'invention, le couteau étant représenté partiellement relevé sur la figure 1 et abaissé sur la figure 2;
- la figure 3 est une coupe suivant la ligne 3-3 de la figure 1;
- la figure 4 est une vue de côté de la partie mobile de la glissière;
- la figure 5 est une vue en plan de l'écrou.

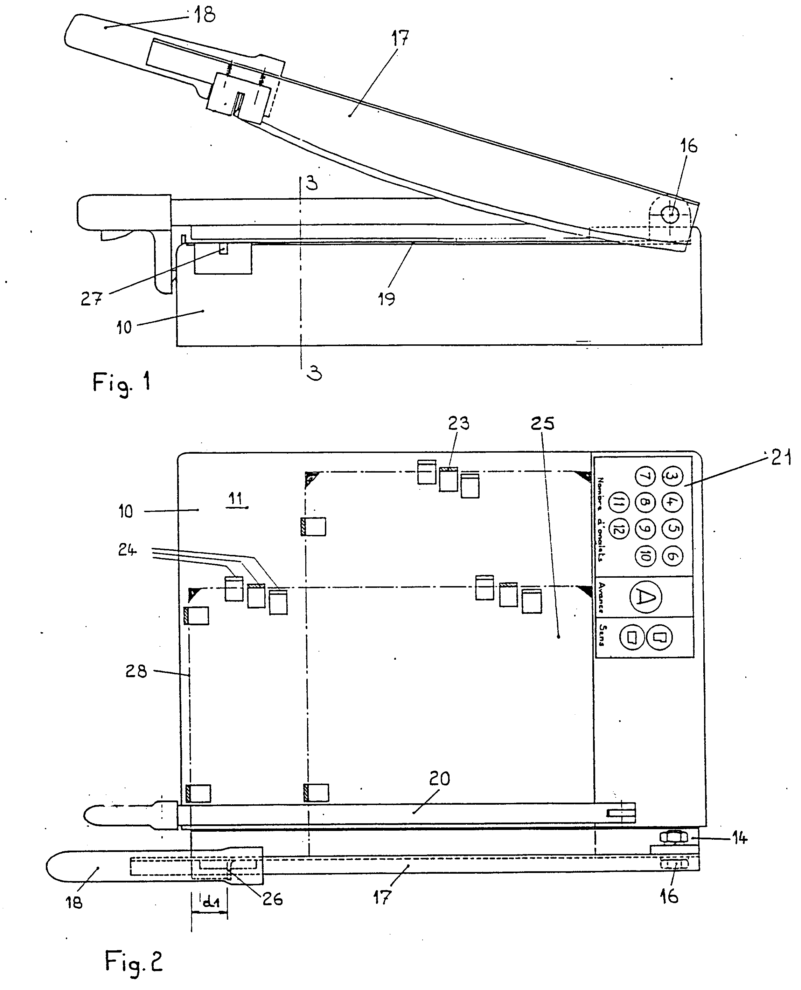

Sur les figures un châssis 10 de forme générale parallélépipèdique présente sur sa face supérieure un plateau 11 de support de feuilles 25, représentées en trait mixte sur la figure 2. A l'un des bords latéraux 12 du châssis 10 est rigidement assujettie une glissière 13 de support et de guidage d'une partie mobile 14. Un couteau 17 est articulé en 16 sur l'extrémité de la partie mobile 14 pour se débattre dans un plan perpendiculaire au plateau 11 sous l'action d'une poignée de manoeuvre 18. La partie mobile 14 porte un contre-couteau 19 et le châssis 10 porte une barre 20 de compression des feuilles 25 à découper, qui sont positionnées sur le plateau 11 en des emplacements prédéterminés 24 par des repères ou butées 23. L'extrémité 26 de la lame du couteau 17 est recourbée ainsi que l'extrémité 27 du contre-couteau 19. Selon la position de la feuille 25 par rapport au couteau 17, ce dernier découpe une bande laissant subsister un onglet de longueur "d1" plus ou moins grande. La position de la feuille 25 est réglable par déplacement de la partie mobile 14 pour découper des onglets de différentes longueurs et ce déplacement est piloté par un microprocesseur à clavier 21, qui commande la rotation d'un moteur d'entraînement d'une vis 28, parallèle à la direction de translation de la partie mobile 14, définie par la glissière 13 de guidage et de support. La partie mobile 14 est reliée à un écrou 29, vissé sur la vis 28, pour se déplacer avec cet écrou lors de la rotation de la vis 28. Ce massicot est décrit en détail dans la demande de brevet précitée, à laquelle on se reportera avantageusement.

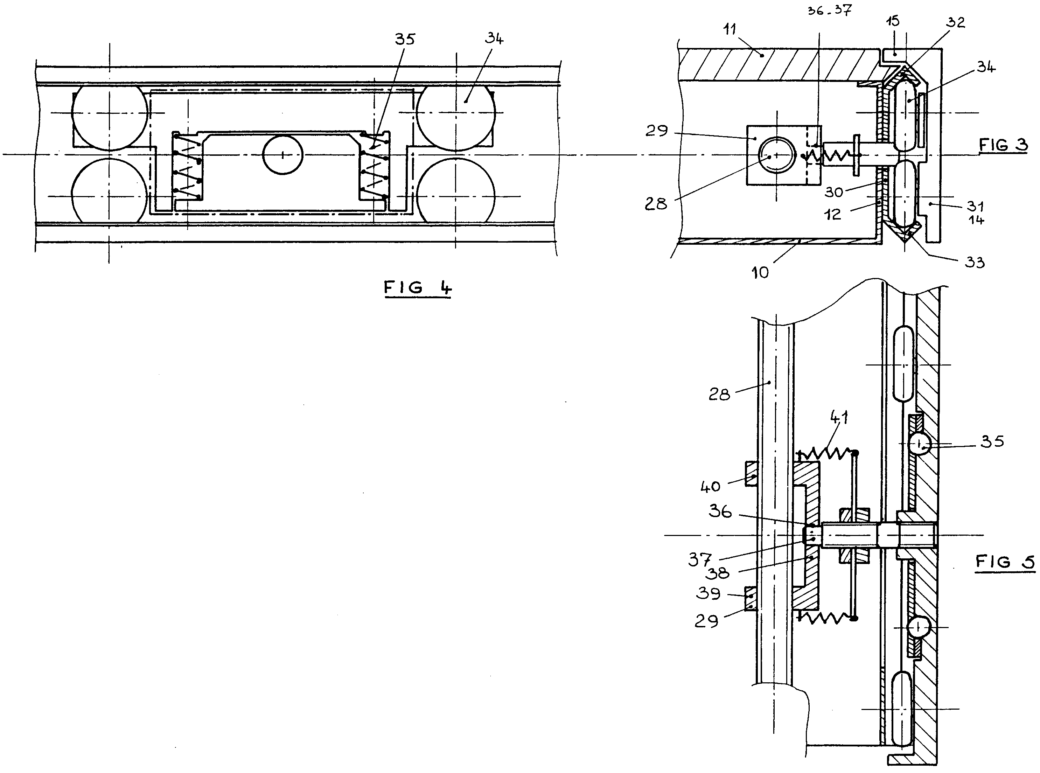

En se référant plus particulièrement aux figures 3 et 4 on voit que la glissière 13 est constituée d'un rail 30 profilé en C et d'un chariot 31, le rail 30 étant parallèle à la vis 28 et solidaire du plateau 11, tandis que le chariot 31 est rigidement assujetti à la partie mobile 14, de préférence du côté de la poignée 18. Le rail 30 est une simple tôle dont les deux bords longitudinaux sont repliés pour former deux gouttières 32,33 de guidage se faisant face. Le chariot 31 est une simple plaque qui porte quatre galets fous 34, formant deux paires de galets espacées dans la direction de translation de la partie mobile 14, parallèle à la vis 28. Dans l'exemple, illustré par les figures d'un rail 30 vertical, deux galets 34 coopèrent avec la gouttière supérieure 32 et deux avec la gouttière inférieure 33 pour supporter et guider efficacement le chariot 31. Les deux galets supérieurs 34 sont sollicités élastiquement au contact du rail 30 pour pallier les imprécisions de fabrication du rail 30, ces galets 34 étant par exemple portés par un support commun soumis à l'action de un ou de plusieurs ressorts 35. L'ensemble glissière 13 est particulièrement simple et assure une translation aisée de la partie mobile 14.
La figure 5 illustre un mode de réalisation du mécanisme d'entraînement à vis 28 et à écrou 29 de la partie mobile 14.

L'écrou 29 en forme de douille allongée présente, en regard du chariot 31, un orifice 36 perpendiculaire à l'axe de la vis 28, dans lequel est engagé à faible jeu un doigt 37 solidaire du chariot 31. Il est facile de voir que le doigt 37 et l'orifice 36 constituent une articulation, qui immobilise en rotation l'écrou 29 et transmet le mouvement de translation de l'écrou 29 à la partie mobile 14, lors d'une rotation de la vis 28. La dimension de l'écrou 29, dans la direction longitudinale de la vis 28, est relativement grande pour assurer un bon guidage, mais en vue de réduire les forces de friction le tronçon central tubulaire 38 est d'une section agrandie évitant tout contact entre ce tronçon et la vis 28. Les deux tronçons d'extrémité 39,40 peuvent être tous deux filetés ou seul l'un d'entre eux, l'autre de surface cylindrique assurant alors un simple guidage. Il est à noter que le même effet peut être obtenu en supprimant le tronçon central 38 et en fixant les deux tronçons d'extrémité 39,40 espacés sur un support commun. La vis 28 est une vis standard du commerce et la structure de l'écrou 29 et celle de la liaison articulée entre l'écrou 29 et le chariot 31 de la partie mobile 14, pallient les imperfections de fabrication. L'écrou 29 engage à faible jeu la vis 28, mais ce jeu engendre un bruit désagréable lors d'une rotation rapide de la vis 28. Selon l'invention ce bruit est atténué en associant à la liaison articulée 36,37 un système élastique, tel qu'un ressort 41, qui sollicite l'écrou 29 transversalement en appui de la vis 28. Il est facile de voir que le système d'entraînement et de guidage de la partie mobile 14, particulier au massicot pour onglets, est simple et d'un coût de fabrication limité.

L'invention est bien entendu nullement limitée au mode de mise en oeuvre plus particulièrement décrit en référence aux dessins et elle s' étend à toute variante restant dans le cadre des équivalences.

## Revendications

1. Massicot de bureau ayant un châssis (10) pouvant être posé sur une table, ledit châssis comportant un plateau fixe (11) de support d'une ou de plusieurs feuilles (25) à massicoter, une partie mobile (14) montée en translation par rapport audit plateau (11), un couteau (17) porté par ladite partie mobile et susceptible de se débattre dans un plan perpendiculaire audit plateau (11) en coopérant avec un contre-couteau (19) pour massicoter la feuille posée sur le plateau et un mécanisme de translation à vis (28) et à écrou (29) pour déplacer la partie mobile (14), lesdits couteau (17) et contre-couteau (19) ayant des extrémités recourbées (26,27) pour une découpe d'une bande laissant subsister un onglet, caractérisé en ce que la liaison (36,37) entre ledit écrou (29) et ladite partie mobile (14) présente un degré de liberté dans la direction perpendiculaire à l'axe de la vis (28) pour pallier les variations d'écartement entre l'écrou et la partie mobile lors du vissage ou dévissage de l'écrou sur la vis et que ladite liaison comprend un doigt (37) d'entraînement, qui est porté par la partie mobile, s'étend perpendiculairement à la direction de translation et qui s'emboîte à coulissement dans un orifice (36) conjugué de l'écrou (29) pour constituer une liaison articulée et coulissante entre l'écrou et la partie mobile.

2. Massicot selon la revendication 1, caractérisé en ce que ledit écrou (29), de forme allongée, présente à chacune de ses extrémités un tronçon (39,40) en forme de douille d'entraînement et/ou de guidage coopérant avec la vis (28), lesdits tronçons (39,40) étant espacés le long de la vis.

3. Massicot selon la revendication 1, ou 2, caractérisé en ce que ledit écrou (29) est constitué d'une douille tubulaire allongée, dont la section tubulaire du tronçon central (38) est élargie pour un libre passage de la vis (28) et dont les deux tronçons d'extrémite (39,40) coopèrent avec la vis, l'un au moins d'entre eux étant fileté pour se visser sur la vis enfilée dans la douille.

4. Massicot selon la revendication 1, 2, ou 3, caractérisé en ce que ladite liaison (36,37) est dotée d'un dispositif élastique (41) sollicitant transversalement l'écrou (29) en appui de la vis (28).

5. Massicot selon l'une quelconque des revendications précédentes, caractérisé en ce qu'il comporte une glissière (13) de guidage et de support de la partie mobile (14), constituée d'un rail profilé (30) et d'un chariot (31), dont l'un est porté par la partie mobile (14) et dont l'autre est solidaire du plateau fixe (11).

6. Massicot selon l'une quelconque des revendications précédentes, caractérisé en ce que un rail (30) de section en forme de C est fixé au plateau fixe (11) parallèlement à la vis (28) et que un chariot (31), solidaire de la partie mobile (14), est monté à coulissement à l'intérieur du rail en C pour guider la partie mobile (14) en translation.

7. Massicot selon la revendication 5 ou 6, caractérisé en ce que ledit rail (30) est formé par une tôle à bords longitudinaux (32,33) repliés.

8. Massicot selon la revendication 5, 6 ou 7, caractérisé en ce que le chariot (31) comporte deux paires de galets (34) espacées le long du rail (30) et que l'un des galets de chaque paire coopère avec le bord inférieur (33) du rail et l'autre galet de la paire avec le bord supérieur (32) du rail.

9. Massicot selon la revendication 8, caractérisé en ce les deux galets (34) coopérant avec le bord supérieur (32) du rail (30) sont montés mobiles sur le chariot (31) et sont sollicités élastiquement en appui du rail.
